# EUROPÄISCHE PATENTANMELDUNG

(11) **EP 3 388 226 A1**
(43) Veröffentlichungstag der Anmeldung: **17.10.2018**
(21) Anmeldenummer: 17165909.7
(22) Anmeldetag: 11.04.2017
(51) Int. Cl.: B30B 9/32

(54) **BALLENPRESSE**

(71) Anmelder: Maschinenfabrik Bermatingen GmbH & Co. KG, 88697 Bermatingen (DE)
(72) Erfinder: Gotterbarm, Roderich, 88697 Bermatingen (DE)
(74) Vertreter: Engelhardt, Volker

(57) **Zusammenfassung**

Bei einer Ballenpresse (1), die von einem kastenförmigen Gehäuse (2) gebildet ist, soll diese ohne Hilfsmittel sowohl während des Aufstellungsvorganges als auch während ihres Gebrauches manuell erfahrbar und somit beweglich sein.

Dies ist dadurch erreicht, dass zwischen dem Untergrund (4) und dem Gehäuse (2) ein Fahrgestell (11) vorgesehen ist, das aus mindestens drei zueinander beabstandeten Laufrollen (12) besteht, dass jede der Laufrollen (12) in einem Käfig (13) drehbar gelagert ist und dass jeder Käfig (13) mittels einer Hubeinrichtung (14, 15 oder 19) höhenverstellbar ist.

## Beschreibung

Die Erfindung bezieht sich auf eine Ballenpresse, die ein Kastenförmiges Gehäuse aufweist, in dem mindestens ein Pressstempel und ein Presseraum eingeschlossen sind, um Kartonagen oder sonstige Abfallprodukte zu einem Ballen zu pressen.

Solche Ballenpressen werden oftmals in Lebensmittelmärkten verwendet, bei denen eine erhebliche Abfallmenge in Form von Verpackungen aus Karton oder Papier anfallen. Es ist erforderlich diese Abfallmengen in ihrem Volumen zu verkleinern, um dadurch zum einen den Lagerraum für diese Abfallmengen auf ein Minimum zu beschränken und zum anderen die Transportkosten für die Beseitigung dieser Abfallprodukte zu minimieren.

Diese Ballenpressen wiegen zwischen 2 und 4 t und können sowohl beim Ausliefern als auch bei möglichen Umgestaltungsmaßnahmen innerhalb des Lebensmittelmarktes nicht oder nur mittels Hilfsmitteln, beispielsweise Gabelstaplern oder Hubwagen, bewegt werden. Zu diesem Zweck ist es erforderlich, in das Gehäuse der Ballenpresse mindestens 2 Einfuhrschlitze einzuarbeiten, in denen die Gabel eines Gabelstaplers oder Hubwagen eintauchen kann. Dabei ist jedoch darauf zu achten, dass die Wandstärke des Gehäuses derart groß bemessen ist, dass die Stabilität des Gehäuses für die Funktion der Ballenpresse beibehalten ist.

Es hat sich ferner als problematisch herausgestellt, dass die benötigten Einfuhrschlitze in dem Gehäuse der Ballenpresse den Bauraum erhöhen, wenn die Stabilität des Gehäuses gegeben sein soll. Bei dem Transport der Ballenpresse, insbesondere wenn diese ausgeliefert wird, ist es erforderlich, die Ballenpresse durch Tür-oder Toröffnungen zu bewegen, die eine vorgegebene Höhe aufweisen. Solche bauseitig bedingten Vorgaben führen dazu, dass lediglich eine bestimmte Größe von Ballenpressen ausgeliefert und somit benutzt werden können.

Es ist daher Aufgabe der Erfindung, eine Ballenpresse der eingangs genannten Gattung derart weiterzubilden, dass diese ohne Hilfsmittel sowohl während des Ausliefervorgangs als auch während ihres Gebrauches manuell verfahren und somit bewegt werden kann. Dabei soll die Bauhöhe der Ballenpresse durch die Bewegungsmöglichkeit nicht eingeschränkt sein und die erforderliche Bedienhöhe für das Entleeren der Ballenpresse soll optimiert sein.

Diese Aufgabe ist erfindungsgemäß durch die Merkmale des kennzeichnen Teils von Patentanspruch 1 gelöst.

Weitere vorteilhafte Weiterbildungen der Erfindung ergeben sich aus den Unteransprüchen.

Dadurch, dass zwischen dem Untergrund und dem Gehäuse ein Fahrgestell vorgesehen ist, dass aus mindestens drei zueinander beabstandeten Laufrollen gebildet ist, das jede der Laufrollen in einem Käfig drehbar gelagert ist und dass jeder Käfig einzeln oder synchron mittels einer Hubeinrichtung höhenverstellbar ist, kann das Gehäuse der Ballenpresse von dem Untergrund angehoben und manuell, also ohne Hilfsmittel, bewegt werden. Da die Käfige und Laufrollen in einem in das Gehäuse eingearbeiteten Zwischenraum einklappbar sind, beeinträchtigt das Fahrgestell zwischen dem Gehäuse und dem Untergrund die Bauhöhe der Ballenpresse nicht. Bereits wenige Zentimeter von ausgefahrenen Laufrollen reichen nämlich aus, dass Gehäuse verfahren zu können. Bei eingeklappter Laufrollen wird die Öffnungskante des Pressraumes in einen optimierten Höhenbereich angeordnet, so dass der Ballen etwa in Beckenhöhe eine Menschen, aus dem Pressraum entnommen werden kann.

Wenn mindestens einer der Käfige um eine vertikale Achse verschwenkbar an dem Gehäuse angelehnt ist kann zudem die Ballenpresse auf einem eng begrenzten Raum um ihre eigene Längsachse gedreht werden, so dass die Ballenpresse beispielsweise aus einem Eckbereich ohne große Manne 4 Probleme ein oder ausgefahren werden kann. Folglich ist es möglich, die Ballenpresse in einem Bereich abzustellen, der für den Pressvorgang geeignet ist jedoch den anderen Betriebsabläufen nicht im Wege steht.

In der Zeichnung sind drei Ausführungsbeispiele für ein an einer Ballenpresse angebrachten Fahrgestell zur Bewegung der Ballenpresse dargestellt, die nachfolgend näher erläutert sind. Im Einzelnen zeigt:

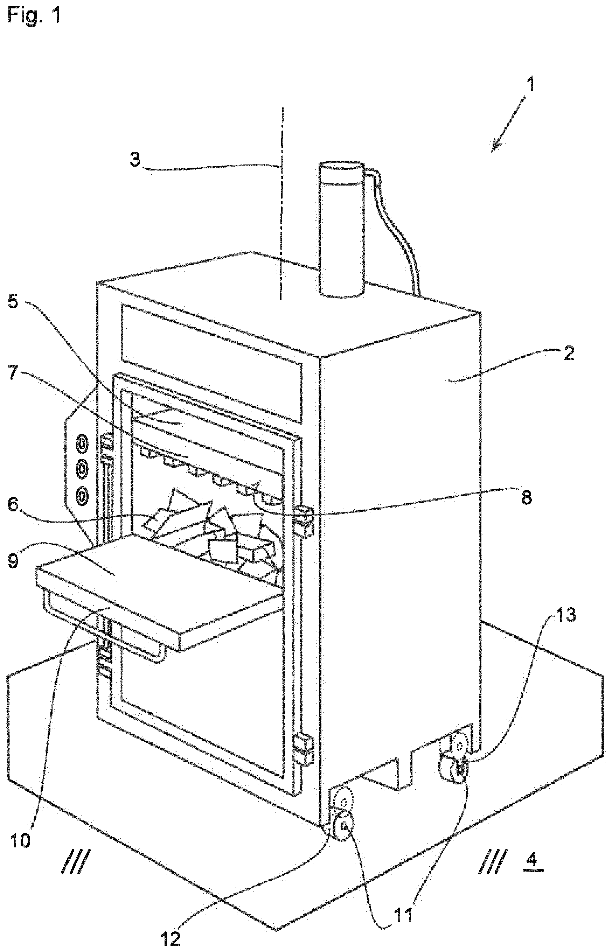

- Figur 1: eine Ballenpresse, die mittels eines Fahrgestells über einen Untergrund belegbar ist, in perspektivischer Ansicht,

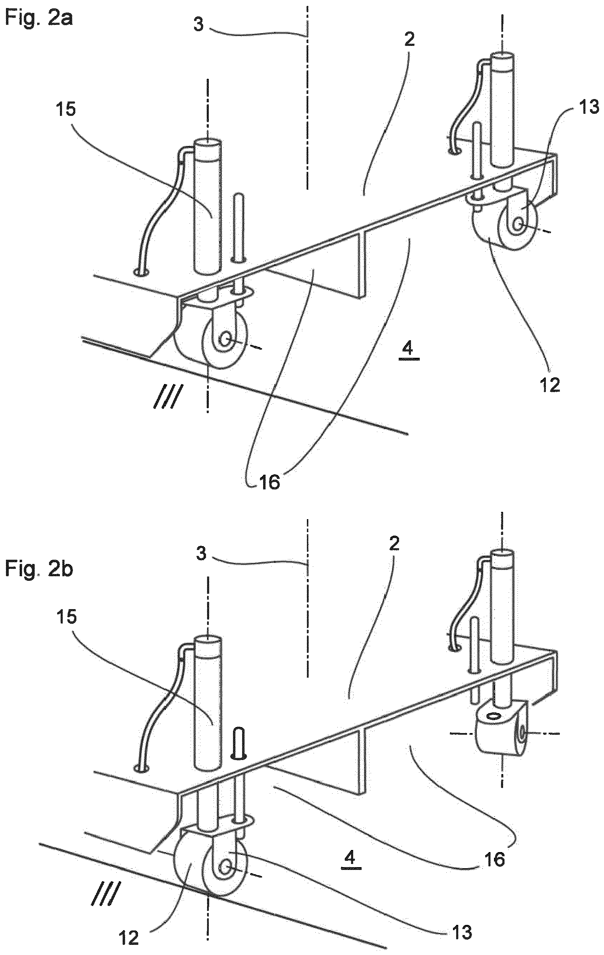

- Figuren 2a und 2b: ein erstes Ausführungsbeispiel eines Fahrgestells gemäß Figur 1, das aus vier Käfigen und jeweils einem drehbar an dieser angelenkten Laufrollen besteht, die in den Eckbereichen des Gehäuses der Ballenpresse angeordnet und mittels jeweils einen Kolben höhenverstellbar sind der Laufrollen im eingefahrenen und ausgefahrenen Zustand,

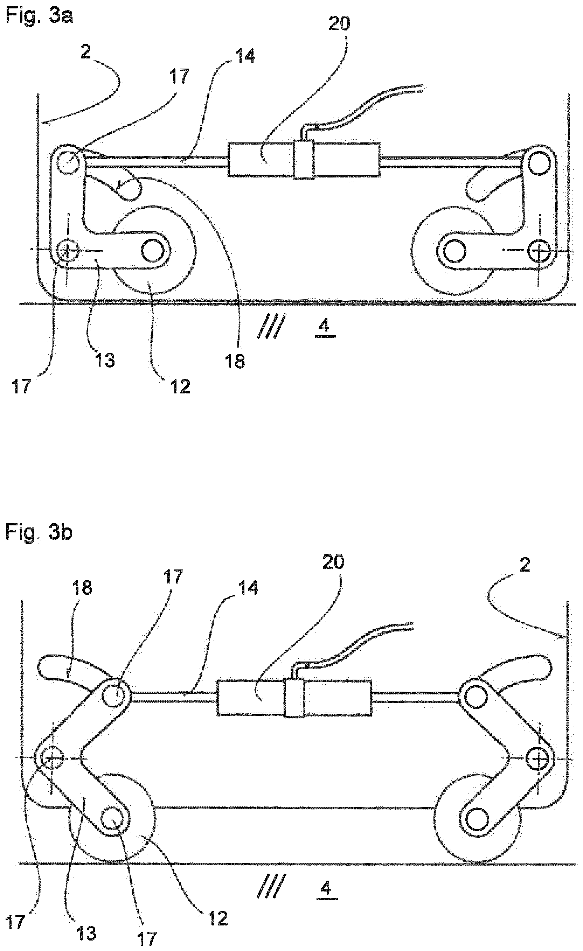

- Figuren 3a und 3b: ein zweites Ausführungsbeispiel eines Fahrgestells gemäß Figur 1, das aus vier L-förmig ausgestalteten Käfigen besteht an dem jeweils eine Laufrolle drehbar angeordnet ist, und einem Spindelantrieb besteht, der trieblich mit dem Käfig verbunden ist im eingeklappten und ausgeklappten Zustand der Laufrollen und

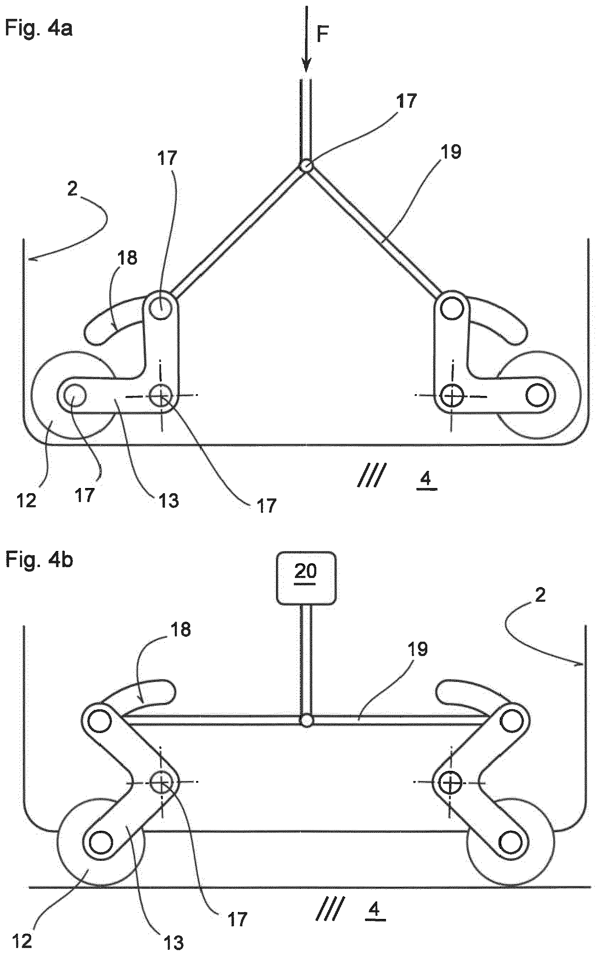

- Figuren 4a und 4b: ein drittes Ausführungsbeispiel eines Fahrgestells gemäß Figur 1, das aus vier L-förmig ausgestalteten Käfig an dem jeweils eine Laufrolle drehbar angelehnt ist, und einem als Kniehebel ausgestaltete Hubeinrichtung besteht, im eingeklappten und ausgeklappten Zustand der Laufrollen.

In Figur 1 ist eine Ballenpresse 1 zu entnehmen, die aus einem kastenförmig gestalteten Gehäuse 2 gebildet ist. Die Längsachse des Gehäuses 2, die auch der Vertikalen entspricht, ist mit der Bezugsziffer 3 gekennzeichnet. Das Gehäuse 2 ist auf einem Untergrund 4 abgestellt.

Die Ballenpresse 1 weist einen von dem Gehäuse 2 und einer durch eine Tür 10 verschlossenen Presseraum 5 auf, in den Abfallmaterial 6 in Form von Kartonagen oder sonstigen Verpackungen einfühlbar sind. Mittels eines parallel zu der Längsachse 3 erfahrbaren Pressstempel 7 ist das Abfallmaterial 6 verdichtet, und zwar so lange bis ein Ballen entsteht, der mittels einer Schlinge bzw. einer Umreifung formstabil gehalten ist. Der derart hergestellte Ballen kann bei geöffneter Tür aus der freigegebenen Öffnung 8 aus dem Pressraum 5 entnommen werden. Dabei ist eine Öffnungskante 9, die durch die Tür 10 gebildet ist definiert, die die Arbeitshöhe der Ballenpresse 1 vorgibt. Diese Öffnungskante 9 soll aufgrund von beherrschbaren Arbeitsbedingungen in einer bestimmten Höhe verlaufen und soll demnach nicht zu hoch oder zu niedrig sein um den hergestellten Ballen aus Abfallmaterial 6 möglichst schnell und kraftsparend aus dem Presseraum 5 herausziehen zu können.

Darüber hinaus ist es erforderlich, die Ballenpresse 1 zumindest zu der Auslieferung bewegen zu können. Gegebenenfalls ist auch die Position der Ballenpresse 1 innerhalb eines Gebäudes während deren Betriebszugehörigkeiten zu verändern und an einer anderen Ort zu platzieren. Um daher eine einfache und manuell beherrschbare Bedienmöglichkeit zur Bewegung der Ballenpresse 1 über den Untergrund 4 zur Verfügung zu stellen, ist zwischen dem Gehäuse 2 und dem Untergrund 4 ein Fahrgestell 11 vorgesehen.

Den drei Ausführungsbeispielen der Figuren 2a bis 4b ist dabei gemeinsam, dass jedes der Fahrgestelle 11 aus vier Laufrollen 12 gebildet ist. Jede der Laufrollen 12 ist dabei in einem unterschiedlich ausgestalteten Käfig 13 drehbar angeordnet.

Gemäß den Figuren 2a und 2b ist der Käfig 13 als U-Profil ausgebildet und zwischen den beiden parallel zueinander verlaufenden Schenkel des Käfigs 13 ist eines der Laufrollen 12 angelenkt. Der jeweilige Käfig 13 ist trieblich mit einer Hubeinrichtung in Form eines Kolbens 15 gekoppelt. Der Kolben 15 kann hydraulisch oder thematisch betätigt werden, sodass sich deren jeweilige Länge ändert. Dadurch ist gewährleistet, dass der Abstand zwischen den Laufrollen 12 und dem Gehäuse 2 variabel einstellbar ist, wodurch das Gehäuse 2 und somit die Ballenpresse 1 bezogen auf den Untergrund 4 angehoben oder abgesenkt werden kann, dass höher verstellbar ist.

Sobald das Gehäuse 2 von dem Untergrund 4 durch das Ausfahren der vier Laufrollen 12 abgehoben ist, kann nämlich die Ballenpresse 1 über den Untergrund 4 bewegt werden, ohne dass hierfür zusätzliche Hilfsmittel erforderlich sind.

Darüber hinaus ist jeder der Käfige 13 um die Vertikale 3 drehbar an dem Druckkolben 15 oder der Gehäuse 2 angelenkt, sodass die Ballenpresse 1 auch aus Eckbereichen manuell heraus bzw. in diese eingefahren werden kann. Die Ballenpresse 1 kann somit auf einer eng begrenzten Höhe bewegt werden.

Den Figuren 3a und 3b ist zu entnehmen, dass die Käfige 13 als L-förmige Bauteile ausgestaltet sind, die insgesamt drei Knotenpunkte 17 aufweisen. Der mittlere Knotenpunkt 17 bildet dabei ein Drehgelenk, um den der Käfig 13 verschenkbar an dem Gehäuse 2 abgestützt ist. Der obere Knotenpunkt 17 ist trieblich mit einer Spindel 14 verbunden, die mittels eines elektrischen, pneumatischen oder hydraulisch betriebenen Antriebsmittels 20 in Rotation versetzt ist. In Figur 3a ist gezeigt, dass die Spindel 14 vollständig ausgefahren ist und dass somit der obere Knotenpunkt 17, der in einer Führungsbahnen 18 eingesetzt ist, die in dem Gehäuse 2 eingearbeitet ist verläuft. Die Laufrollen 12 sind somit von dem Untergrund 4 beabstandet und die Ballenpresse 1 steht auf dem Untergrund 4.

Der in Figur 3b abgebildete ausgefahrene Zustands des Fahrgestells 11 zeigt, dass der obere Knotenpunkt 17 in einem unteren Bereich der Führungsbahnen 18 verläuft und dass die Spindel 14 eingefahren ist. Durch die Spindel 14 ist somit der obere Knotenpunkt 17 bananenförmig in Richtung des Untergrundes 4 in der Führungsbahnen 18 bewegt worden und der Käfig 13 ist um den mittleren Knotenpunkt 17 in Richtung des Untergrundes 4 gedrückt, so dass die Ballenpresse 1 von dem Untergrund 4 abgehoben ist und auf den Laufrollen 12 aufsteht. Da die Laufrollen 17 in dem unteren Knotenpunkt 17 drehbar mit dem jeweiligen Käfig 13 gekoppelt sind, kann nunmehr die Ballenpresse 1 relativ zu dem Untergrund 4 bewegt werden.

In den Figuren 4a und 4b ist eine weitere Möglichkeit zur Anhebung bzw. Absenkung des Fahrgestells 11 zu entnehmen. Dabei ist der obere Knotenpunkt 17 des jeweiligen Käfigs 13 in einer der bananenförmig ausgestalteten Führungsbahnen 18 eingesetzt die entgegengesetzt zu den Führungsbahnen 18 der Ausführungsvariante gemäß Figuren 3e und 3b verläuft, und trieblich mit einem Kniehebel 19 gekoppelt. Das eingeklappte Fahrgestell 11 gemäß Figur 4a wird mittels eines elektrisch, pneumatisch oder hydraulisch betriebenen Antriebsmittels 20 parallel zu dem Untergrund 4 aufgespreizt. Dabei bewegen sich die oberen Knotenpunkte 17 in der Führungsbahnen 18 in Richtung des Untergrundes 4, wodurch die jeweilige Laufrollen 12 in Richtung des Untergrundes 4 durch den Kniehebel 19 gedrückt sind.

Sämtlichen drei Ausführungsvarianten ist gemeinsam, dass die Laufrollen 12 und die Käfige 13 in einem in dem Gehäuse 2 eingearbeiteten Zwischenraum 16 im jeweils eingefahrenen Zustand eintauchen und folglich die Öffnungskante 9 während des Betriebes der Ballenpresse 1 in einer vorgegebenen einheitlichen Höhe verläuft. Durch das ausgefahrene Fahrgestell 11 gelangen die jeweiligen Laufrollen 12 aus dem Zwischenraum 16 und heben somit die Ballenpresse 1 an. Bereits wenige Zentimeter vor ausgefahrenen Laufrollen 12 reichen aus, um eine Bewegungsmöglichkeit für die Ballenpresse 1 zu schaffen, so dass sich Tür- oder Türöffnungen im Lagerhalter problemlos positioniert werden können und die Baugröße der Ballenpresse 1 nahezu uneingeschränkt gestaltet werden kann. Das Ein- bzw. Ausfahren der Laufrollen 12 kann dabei einzeln oder synchron erfolgen.

## Patentansprüche

1. Ballenpresse (1), die von einem kastenförmigen Gehäuse (2) gebildet ist,
**dadurch gekennzeichnet,**
**dass** zwischen dem Untergrund (4) und dem Gehäuse (2) ein Fahrgestell (11) vorgesehen ist, das aus mindestens drei zueinander beabstandeten Laufrollen (12) besteht, dass jede der Laufrollen (12) in einem Käfig (13) drehbar gelagert ist und dass, jeder Käfig (13) mittels einer Hubeinrichtung (14, 15 oder 19) höhenverstellbar ist.

2. Ballenpresse nach Anspruch 1,
**dadurch gekennzeichnet,**
**dass** jeder der Käfige (13) und die daran befestigte Laufrolle (12) in einen in dem Gehäuse (2) der Ballenpresse (1) eingearbeiteten Zwischenraum (16) angeordnet sind und aus diesem mittels der Hubeinrichtung (14, 15, 19) in Richtung des Untergrundes (4) bewegbar sind.

3. Ballenpresse nach Anspruch 1 oder 2,
**dadurch gekennzeichnet,**
**dass** die Käfige (13) und die Laufrollen (12) in den Eckbereichen des Gehäuses (2) der Ballenpresse (1) angelehnt sind.

4. Ballenpresse nach einem der vorgenannten Ansprüche,
**dadurch gekennzeichnet,**
**dass** mindestens einer der Käfige (13) um eine vertikal verlaufende Achse (3) verschenkbar an dem Gehäuse (2) angelenkt ist.

5. Ballenpresse nach einem der vorgenannten Ansprüche,
**dadurch gekennzeichnet,**
**dass** die Hubeinrichtung (14) als parallel zu dem Untergrund (4) verlaufende Spindel (14) ausgebildet ist, dass die Spindel (14) mittels eines elektrisch, pneumatische oder hydraulisch betätigten Antriebsmittel (20) in Rotation versetzt ist und dass das freie Ende der Spindel (14) mit einem der Käfige (13) trieblich gekoppelt ist.

6. Ballenpresse nach Anspruch 5,
**dadurch gekennzeichnet,**
**dass** die Spindel (14) beim Ausklappen der Laufrollen (12) eine Zugkraft und beim Einschwenken der Laufrollen (12) eine Druckkraft auf den jeweiligen Käfig (13) ausübt.

7. Ballenpresse nach einem der Ansprüche 1 bis 4,
**dadurch gekennzeichnet,**
**dass** die Hubeinrichtung (19) als Kniehebel aufgeführt ist, dass der Kniehebel (19) trieblich mit einer oder zwei der Käfige (13) gekoppelt ist und dass jeder Kniehebel (19) parallel zu dem Untergrund (2) aufgespreizt ist.

8. Ballenpresse nach einem der vorgenannten Ansprüche,
**dadurch gekennzeichnet,**
**dass** jeder der Käfige (13) drei Knotenpunkte (17) aufweist, dass der mittlere Knotenpunkt (17) als Drehgelenk ausgestaltet ist, der drehbar mit dem Gehäuse (2) gekoppelt ist, dass der obere Knotenpunkt (17) in eine in dem Gehäuse (2) entgegengeleiteten Führungsbahn (18) eingesetzt ist und dass dieser Knotenpunkt (17) mit der Spindel (14) oder dem Kniehebel (19) gekoppelt ist und dass der untere Knotenpunkt (17) die Drehachse für eine der Laufrollen (12) bildet und diese mit dem Käfig (13) verbindet.

9. Ballenpresse nach Anspruch 8,
**dadurch gekennzeichnet,**
**dass** die Führungsbahnen (18) bananenförmig in Richtung des Untergrundes (4) geneigt sind und dass der jeweilige obere Knotenpunkt (17) der Käfige (13) verschiebbar in den Führungsbahnen (18) gehalten ist

10. Ballenpresse nach einem der Ansprüche 1 bis 4,
**dadurch gekennzeichnet,**
**dass** die Hubeinrichtung (15) als pneumatische oder hydraulisch betätigbarer Kolben (15) ausgebildet ist, dass jeder Kolben (15) einem der Käfige (13) zugeordnet und mit diesem trieblich gekoppelt ist und dass jeder der Kolben (15) senkrecht zu dem Untergrund (4) ausgerichtet ist.
